# EUROPEAN PATENT APPLICATION

(11) **EP 4 647 143 A1**
(43) Date of publication of application: **12.11.2025**
(21) Application number: 24174672.6
(22) Date of filing: 07.05.2024
(51) Int. Cl.: B01D 39/16, D04H 1/587, D04H 1/64, D06M 15/263, D06M 15/285, C09D 167/06

(54) **NON-WOVEN MEDIA AND METHOD FOR ITS PRODUCTION**

(71) Applicant: Ahlstrom Oyj, 02150 Espoo (FI)
(72) Inventor: Fantini, Diego, Torino (IT); Billod, Elise, Le Mottier (FR)
(74) Representative: Pfenning, Meinig & Partner mbB

(57) **Abstract**

The present disclosure relates to a non-woven media comprising at least one first layer which comprises at least one type of randomly intermingled fibers which are impregnated with at least one fluorine free and silicone free water-repellent. The fibers are bound by a binder to form the non-woven media.

## Description

The present disclosure relates to a non-woven media comprising at least one first layer which comprises at least one type of randomly intermingled fibers which are impregnated with at least one fluorine free and silicone free water-repellent. The fibers are bound by a binder to form the non-woven media.

### BACKGROUND

Chemical treatment of fibers and non-wovens with C6-fluorinated chemicals (per- and polyfluoroalkyl substances, PFAS) is the state of the art when looking for water repellent properties without impacting the porosity of the papers and nonwovens. Even with a limited amount of chemicals applied, the low surface tension properties of fluoro containing chemicals leads to a chemical barrier. The main disadvantage of this solution is due to the fact that C6-fluorinated polymers can degrade into perfluorohexanoic acid (PFHxA), a chemical substance considered by different regulatory bodies (mainly in the US and in Europe) as bio-persistent and bio-accumulative compounds. In this context C6-polymer is expected to be banned in the future. Other PFAS like perfluoropolyethers (also called C2 or PFPE) or polytetrafluoroethylene (also called PTFE or Teflon) are known to provide papers and nonwovens with chemical barrier properties but are as well in the radar of future chemical restriction projects. Finally, all PFAS are relatively expensive chemicals.

PFAS-free approaches have been developed for grease resistance in food packaging applications and consisting in increasing refining energy combined by application of film former to the paper. The film former is in general a viscous coating of starch and alginate at the surface of a low permeability paper. This type of approach is an effective way to make paper grease resistant when the paper has a closed structure but is not suitable when the porosity of the paper or nonwoven needs to be kept similar as for filtration applications. Also, this method requires more energy and makes the paper more difficult to dry and dewater. This can slow down/reduce production rate. To overcome this loss in production, an investment in capital would be needed to properly refine and dry the paper. A paper that is more closed up can cause converting differences at our customers that print/glue and form the paper into packaging for food applications.

US 2012/0107588 A1 discloses a product including glass fibers and a dendrimer that is applied as a coating, which is in addition to a further water repellent (like fluorochemical or polysiloxane). The dendrimer disclosed could include branches or repeat units of polyacrylic acid or a copolymer thereof, but no mention is made of any divalent group or of the length of the side-chains. The dendrimer used is in the form of "particles" in a suspension and does not appear to be polymerizable. In addition, the patentee states that the dendrimer may be used to facilitate the attachment of other components such as water repellants (e.g., fluorinated species) onto a fiber or fiber web. However, the dendrimer does not provide for the water repellent property as it needs to be combined with a further water repellent in order to meet required hydrophobicity levels. The provided media exhibit water repellency measured by hydrohead of 5 - 20 kPa, however the material is not fluoro-free and not free of paint wetting impairment substances (PWIS).

Further, US 2022/0161169 A1 describes a product that has a water-repellent additive which can have an alkyl/alkenyl/alkynyl water-repellent functional group. Each water-repellent functional group is independently a side chain of a repeat unit of a polymer and/or bonded to a silicon atom and/or a metal atom. The filter media also uses fluorinated water-repellent additives with minimal fluorine atoms. In most embodiments, the water-repellents have one part composed of a fluorinated repeating unit and a non-fluorinated repeating unit. The provided media has a water repellency measured by hydrohead of greater than 4 inches H₂O (i.e. 1 kPa), but the material is neither fluoro- nor PWIS/silicone-free.

Another approach to impart water repellent properties to a non-woven or a filter media is by applying organic waxes to the fibers of the non-woven. The drawback of this solution, however, is that waxes are easily washed out of the non-woven so that over time the water-repellent properties diminish.

EP 4 324 860 A1 relates to a liquid-repellent composition which is hydrocarbon-based and can impart excellent liquid repellency; a method for treating a substrate using the liquid-repellent composition; and an article equipped with a coating film which is hydrocarbon-based and has excellent liquid repellency. However, the use of a film coating will make the media surface non-permeable and close up the surface pores (which is needed for removal of dust and/or dirt). The provided substrates therefore have little porosity and air permeability and the remaining pores in the filter materials will easily be clogged.

Normally, the fibers of non-wovens are bound with a curable binder. However, it is known that the application of a binder can lead to a partial obstruction of the pores within the non-woven and therefore leads to non-wovens with less air-permeability, which makes these non-wovens less applicable for filter media, especially filter media which have contact with excessive moisture or even liquid water.

It is therefore the object of the present disclosure to provide a non-woven material, which is free of fluoro-containing and PWIS/silicone-containing water repellents but nevertheless sufficiently and permanently hydrophobic. Simultaneously, the material should have a high air permeability while at the same time have an adequate strength. The non-woven media must have sufficient water repellency to prevent fiber swelling, reduce the change in dimensions of the material due to changes in humidity (hygroexpansivity), and avoid disintegration of the fibrous material. For example, a common failure mode in a non-woven air intake filter media is pleat deformation, wherein the folds of the pleated material may distort, pinch into each other or at worst, completely collapse after the filter is contaminated with water, for example, after a rainstorm.

### BRIEF SUMMARY

The above mentioned objectives are addressed by the present disclosure which in a first aspect provides a non-woven media including at least one first layer including
a) at least one type of randomly intermingled fibers,
b) said fibers being impregnated with at least one fluorine free and silicone free water-repellent including a polymer (P1) having a repeating unit based on a first monomer represented by Formula (a)

   (R¹-Q¹)HC=CH(Q²-R²) Formula (a)

   wherein in Formula (a), Q¹ and Q² each independently represent a divalent linking group, and R¹ and R² each independently represent a monovalent hydrocarbon group having 8 to 28 carbon atoms, and
c) at least one binder selected from the group consisting of latex binders, melamine resins, phenolic resins (such as e.g. novolac resins), acrylic and a combination of two or more of the aforementioned binders,
wherein the fibers are bound by means of the binder.

According to the present disclosure, the fibers are impregnated with the above defined polymeric binder, according to which at the surface of each fiber a thin coating of the polymer may be present. However, the non-woven media does not have a coating film at its surface as it is otherwise known from the prior art.

Surprisingly, it could be observed that the non-woven media according to the present disclosure not only has excellent and permanent water-repellent properties but at the same time has excellent strength and better air-permeability compared to the application of other water-repellents. At the same time, fluoro- and silicon-containing chemicals can be avoided. The current disclosure on the hand involves impregnation and coating the surface of the fibers with the water-repellent without significantly affecting the pore structure of the media.

In a preferred embodiment, the non-woven media according to the present disclosure is free of any fluoro- and silicone- containing chemicals and waxes.

The non-woven media according to the present disclosure is highly water-repellent and has similar or better water-repellency as fluorocarbon treated material, and maintains similar porosity and mechanical strength. The disclosure is generally directed to a fluorine-free chemical treatment applicable to non-wovens and paper filter media to provide them with high hydrophobicity without significant impact of product porosity/ permeability. The chemical used is preferably a polymer with a branched monovalent alkyl side-chain containing 8-28 carbon atoms and a divalent linking group (e.g. C=O, C=C etc.), and is preferably used in combination with a binder. The combination of the fibers and chemical treatment allows for the advantageous repellent properties, without the need for harmful chemical treatments like fluorocarbons and is also advantageously PWIS-free (i.e. free of paint wetting impairment substances, like silicones, oils and grease- in some automotive air filtration and paint applications, having silicone-free air prevents costly downtime and product spoilage.)

The polymer may be crosslinked and can be considered as a hyperbranched brush polymer.

According to a preferred embodiment in the polymer (P1) Q¹ and Q² of the monomer (a) are each independently one of the group consisting of -C(=O)-, -C(=O)-O-, -O-C(=O)-, and -C(=O)-NH-.

Further, the residues R¹ and R² of the first monomer according to formula (a) can each independently be a monovalent hydrocarbon group having 8 to 24, preferably 12 to 24 carbon atoms.

The polymer (P1) also can be a copolymer. In this case the (co)polymer further comprises a unit based on a at least one further monomer which is different from the first monomer according formula (a). This at least one further monomer can e.g. be a second monomer, having one polymerizable unsaturated group and an electron-donating group adjacent to the unsaturated group in one molecule and preferably is represented by Formula (b),

CH₂=CHR³ Formula (b)

wherein in Formula (b), R³ is an electron-donating group.

In this embodiment, it is preferred that the electron-donating group is at least one selected from the group consisting of an aliphatic hydrocarbon group which may have a substituent, -O-C(=O)R⁴, -OR⁴, and -NH-C(=O)R⁴, in which R⁴ represents an aliphatic hydrocarbon group which may have a substituent.

In case that the polymer is a copolymer, it is preferred that a proportion of the repeating unit based on the first monomer is 5% to 80% by mass with respect to all constitutional units of the polymer (P1) and/or the repeating unit based on the second monomer is 20% to 95% by mass with respect to all constitutional units of the polymer (P1).

The copolymer can comprise further repeating units which can be based on a third to fifth monomer selected from the group consisting of the following monomers:
c) a third monomer represented by Formula (c),

   CH₂=CX¹X² Formula (c)

   wherein in Formula (c), X¹ and X² each independently represent a halogen atom or a hydrogen atom, and X¹ and X² are not hydrogen atoms at the same time, wherein preferably wherein the monomer (c) is at least one selected from the group consisting of vinyl chloride and vinylidene chloride,
d) a fourth monomer represented by Formula (d),

   CH₂=CR⁵C(=O)OR⁶ Formula (d)

   wherein in Formula (d) R⁵ represents a hydrogen atom or a methyl group, and R⁶ represents a monovalent hydrocarbon group which may have a substituent,
e) a fifth monomer having a crosslinkable functional group.

For further details of the polymer (P1) or copolymer, respectively, and its methods of production reference is made to EP 4 324 860 A1. All embodiments regarding the polymer (P1) of this patent application are incorporated by reference into the present disclosure of the invention.

The fibers of the non-woven media according to the present disclosure can preferably be selected from the group consisting of natural fibers, synthetic fibers, glass fibers, carbon fibers and mixture of different fiber types or different types of the same fibers.

Natural fibers can be selected from the group consisting of cellulose fibers, such as wood fibers, pulp, cotton, and vegetable fibers comprising cellulose and animal fibers, such as wool, and mixtures and combinations thereof.

A "cellulosic fiber" is a fiber composed of or derived from cellulose. The cellulosic fibers can be selected from the group of natural or regenerated cellulose fibers, such as cellulose, lyocell, viscose and any other derivatives of cellulosic fibers. The natural cellulose fibers may be wood (e.g., cedar) fibers, such as softwood fibers and/or hardwood fibers. Other examples of natural cellulose fibers are also possible (e.g., nano-cellulose fibers, such as nanofibrillated fibers and/or fibrous cellulose nanocrystals; microfibrillated cellulose). It is also possible for a fiber web to comprise wool.

Exemplary softwood fibers include fibers obtained from mercerized southern pine ("mercerized southern pine fibers or HPZ fibers"), northern bleached softwood kraft (e.g., fibers obtained from Robur Flash ("Robur Flash fibers")), southern bleached softwood kraft (e.g., fibers obtained from Brunswick pine ("Brunswick pine fibers")), and/or chemically treated mechanical pulps ("CTMP fibers"). For example, HPZ fibers can be obtained from Buckeye Technologies, Inc., Memphis, TN; Robur Flash fibers can be obtained from Rottneros AB, Stockholm, Sweden; and Brunswick pine fibers can be obtained from Georgia-Pacific, Atlanta, GA.

Exemplary hardwood fibers include fibers obtained from Eucalyptus ("Eucalyptus fibers"). Eucalyptus fibers are commercially available from, e.g., (1) Suzano Group, Suzano, Brazil ("Suzano fibers"), (2) Group Portucel Soporcel, Cacia, Portugal ("Cacia fibers"), (3) Tembec, Inc., Temiscaming, QC, Canada ("Tarascon fibers"), (4) Kartonimex Intercell, Duesseldorf, Germany, ("Acacia fibers"), (5) Mead-Westvaco, Stamford, CT ("Westvaco fibers"), and (6) Georgia-Pacific, Atlanta, GA ("Leaf River fibers").

Synthetic fibers preferably are selected from polymeric fibers, in particular polyester fibers (such as e.g. PET fibers), polypropylene fibers, polyethylene fibers, polyamide fibers (e.g. aramide fibers), glass fibers, carbon fibers and mixtures and combinations thereof.

If mixtures of different fiber types are included in the non-woven media according to the present disclosure, it is preferred that that the mixture is selected from the group consisting of mixtures of synthetic and cellulose fibers, the mixture comprising up to 30 wt.-% synthetic fibers, based on total weight of fibers, mixtures of glass and cellulose fibers, wherein there is up to 20wt% glass fibers, based on total weight of fibers mixture of cellulose, synthetic and glass fibers, comprising at least 50 wt.-%, preferably more than 60 wt.-%, more preferably more than 70 wt.-% cellulose fibers.

Especially preferred the fibers are short-cut fibers, primarily cellulose fibers and optionally also some synthetic short-cut fibers like PET or some glass fibers.

In a preferred embodiment, the total content of the fluorine free and silicone free water-repellent with respect to the non-woven media on a dry weight basis is 0.1 to 10 wt.-%, preferably 0.5 to 7.5 wt.-%, more preferably 1.0 to 5.0 wt.-%, especially preferred 1.5 to 4.5 wt.-%.

The non-woven media further can comprise at least one additive selected from the group consisting of flame retardants, pigments, dyes and conductivity additives, such as carbon black. A flame-retardant version of this material can be made which involves adding a flame-retardant additive (e.g. Aflammit) in the binder mix). Carbon black can be added to the binder mix to produce a conductive material.

The binder content in the non-woven media preferably is at minimum 10%, 15%, 20% and at maximum 50%, 45%, 40%. Accordingly, in the non-woven media according to the present invention the total content of the binder with respect to the hydrophobic non-woven media on a dry basis can be e.g. selected to be 10.0 to 50.0 wt.-%, preferably 15.0 to 40.0 wt.-%, especially preferred 20.0 to 30.0 wt.-%.

Without being bound to theory it is believed that due to the relatively large amount of binder the water repellent migrates to the surface of the coating resulting from the impregnation of the fibers. The water-repellent thus orients itself with the pendant aliphatic side-group to minimize surface energy. It is believed that if the surface energy of the solid surface of the fibers is lower than surface tension of the liquid (e.g. water) that the surface is repellent of that liquid.

The basis weight of the non-woven media can be 60 to 260 g/m².

The non-woven media is characterized by a preferred thickness between 200 to 600 µm, measured according to ISO 9073-2:1997.

The non-woven media according to the present disclosure further can be characterized by an air permeability of at least 50 l/m²/s, preferably at least 80 l/m²/s, more preferably at least 150 l/m²/s and/or at most 1500 l/m²/s, more preferably at most 900 l/m²/s, especially at most 600 l/m²/s, such as e.g. in between 50 and 1500 l/m²/s at 200 Pa measured according to the TAPPI Standard T 251 cm-85 ("Air Permeability of Porous Paper, Fabric and Pulp Handsheets") with 0.5 inch (12.7 mm).

In other embodiments, the non-woven media preferably has an air permeability in between 80 and 900 l/m²/s at 200 Pa, more preferably in between 150 and 600 l/m²/s at 200 Pa, especially if the non-woven media does not have a further nanofiber layer as further explained below. If the non-woven media is further finished with an additional nanofiber layer, its air permeability preferably is in between75 and 800 l/m²/s at 200 Pa, more preferably in between 100 and 600 l/m²/s at 200 Pa.

Further, the non-woven media according to the present disclosure can exhibit a dry MD (machine direction) tensile strength of 1.0 to 4.6 kN/m and/or a wet MD tensile strength of 0. 5 to 3 kN/m, measured in accordance with ISO 9073-4:2021.

The hydrostatic pressure of the non-woven media according to the present disclosure can be more than 15 cm, measured according to EDANA NWSP 80.6 (23).

The hydrophobicity of the non-woven media according to the present invention can be measured by the below explained ethanol/water drop test. A non-woven media is considered to have high hydrophobicity when 8 out of 10 of the applied drops remain at the surface using a solution containing 13 vol.-%, preferably 22 vol.-%, especially preferred 36 vol.-% ethanol after 1 min. If the non-woven media according to the present disclosure comprises more than one layer, the water repellency refers to the layer comprising the impregnated fibers as explained above.

The non-woven media according to the present disclosure preferably is a single-layer material. However, it is also possible and equally preferred that in addition to the at least one first layer at least one additional second layer of a non-woven media comprising intermingled fibers is present which is adjacent to the at least one first layer and connected to the at least one first layer.

The non-woven media can be provided with at least one second layer of fibers, such as an additional nanofiber layer for additional filtration efficiency. The nanofiber layer can be applied by any technique known to a skilled person and can involve either a single step (preferable) or multiple steps. A common technique to apply a nanofiber coating is deposition onto the non-woven media, preferably by electrospinning. Also, the nanofiber coating layer is PFAS-free and silicone-free. Typical materials used for the nanofiber coating are polymers, such as polyamides (such as PA6), polyurethanes, polyacrylonitrile (PAN), polyether-sulfones (PES), poly-lactic acid (PLA), polyvinyl butyral, polyvinyl pyrrolidone, polycaprolactone etc. Also nanofibers made of organics are possible such as e.g. cellulose, nano-cellulose, porcine gelatin, lignin, cellulose acetate, hydroxypropyl cellulose, fibrin, laminin, vitronectin and hyaluronic acid. Further, also nanofibers of inorganic materials. Such as α-alumina, γ-alumina, spinel, titanium oxides (e.g. rutil or anatase) zirconium dioxide, silica, silicon or carbon/graphite are possible PA6 is the most preferred material for the nanofiber coating.

Especially preferred, the non-woven media is fluorine-free or silicone-free, especially fluorine-free and silicone-free. This applied regardless to whether the non-woven media is constituted of a single first layer or comprises additional second layers as described before.

A preferred exemplary embodiment of the present disclosure, is a non-woven media made of a primarily cellulosic media (which is usually water-absorbent) impregnated with a blend comprising up to 5% water-repellent comprising the polymer (P1) wherein the fibers are bound by at least one binder resins such as e.g. a melamine, phenolic, acrylic or latex binder.

The present disclosure therefore in a second aspect also relates to a method of producing a non-woven media according to the present disclosure, comprising the following steps:
wet laying the at least one type of randomly intermingled fibers,
impregnating the fibers with the at least one fluorine free and silicone free water-repellent and the at least one binder, and
curing the binder.

The water repellent can be used with other chemicals as part of a blend. The other chemicals preferably also do not contain any fluorine containing or PWIS chemicals. The water repellent and the binder can be applied in a single method step, i.e. applied as a mixture.

If an additional layer or the additional layers (such as e.g. the above mentioned nanofiber layers) are part of the non-woven media, these additional layer or layers can be attached to the first layer according to any technique known from the prior art. For example, the layers can be produced separately and attached to each other by adhesive means, e.g. gluing or by physical means such as e.g., needle punching or calendaring. It is also possible to produce separate strata of different fibers (e.g., by wet- or dry-laying techniques) which in the later finished non-woven media represent the distinct layers and to commonly fix the fibers by e.g. curing the applied binder.

The additional at least one further second layer can be applied on one or both surfaces of the first layer.

The present disclosure accordingly can be characterized by the following aspects:
1. Non-woven media comprising at least one first layer comprising
   f) at least one type of randomly intermingled fibers
   g) said fibers being impregnated with at least one fluorine free and silicone free water-repellent comprising a polymer (P1) having a repeating unit based on a first monomer represented by Formula (a)

      (R¹-Q¹)HC=CH(Q²-R²) Formula (a)

      wherein in Formula (a), Q¹ and Q² each independently represent a divalent linking group, and R¹ and R² each independently represent a monovalent hydrocarbon group having 8 to 28 carbon atoms, and
   d) at least one binder selected from the group consisting of latex binders, melamine resins, phenolic resins, acrylic and a combination of two or more of the aforementioned binders,
   wherein the fibers are bound by means of the binder.
2. The non-woven media according to aspect 1, characterized in that in the polymer (P1)
   Q¹ and Q² of the monomer (a) are each independently one of the group consisting of -C(=O)-, -C(=O)-O-, -O-C(=O)-, and -C(=O)-NH- and/or R¹ and R² of the monomer according to formula (a) are each independently a monovalent hydrocarbon group having 8 to 24, preferably 12 to 24 carbon atoms.
3. The non-woven media according to one of the preceding aspects, characterized in that the polymer (P1) is a copolymer further having a repeating unit based on a second monomer, being different from the first monomer, the second monomer having one polymerizable unsaturated group and an electron-donating group adjacent to the unsaturated group in one molecule, wherein the second monomer preferably is represented by Formula (b),

   CH₂=CHR³ Formula (b)

   wherein in Formula (b), R³ is an electron-donating group.
4. The non-woven media according to the preceding aspect, characterized in that the electron-donating group is at least one selected from the group consisting of an aliphatic hydrocarbon group which may have a substituent, -O-C(=O)R⁴, -OR⁴, and -NH-C(=O)R⁴, in which R⁴ represents an aliphatic hydrocarbon group which may have a substituent.
5. The non-woven media according to one of the preceding aspects characterized in that a proportion of
   the unit based on the monomer (a) is 5% to 80% by mass with respect to all constitutional units of the polymer (P1) and/or
   the unit based on the monomer (b) is 20% to 95% by mass with respect to all constitutional units of the polymer (P1).
6. The non-woven media according to one of the aspects 2 to 5, characterized in that the polymer (P1) is a copolymer further having at least one repeating unit based on a monomer, selected from the group consisting of the following third to fifth monomers:
   c) a third monomer represented by Formula (c),

      CH₂=CX¹X² Formula (c)

      wherein in Formula (c), X¹ and X² each independently represent a halogen atom or a hydrogen atom, and X¹ and X² are not hydrogen atoms at the same time, wherein preferably wherein the monomer (c) is at least one selected from the group consisting of vinyl chloride and vinylidene chloride,
   d) a fourth monomer represented by Formula (d),

      CH₂=CR⁵C(=O)OR⁶ Formula (d)

      wherein in Formula (d) R⁵ represents a hydrogen atom or a methyl group, and R⁶ represents a monovalent hydrocarbon group which may have a substituent.
   e) a fifth monomer having a crosslinkable functional group.
7. The non-woven media according to one of the preceding aspects, characterized in that the fibers are selected from the group consisting of natural fibers, synthetic fibers, glass fibers, carbon fibers and mixture of different fiber types or different types of the same fibers.
8. The non-woven media according to the aspect 7, characterized in that the
   natural fibers are selected from the group consisting of cellulose fibers, such as wood fibers, pulp, cotton, and vegetable fibers comprising cellulose and animal fibers, such as wool, and mixtures and combinations thereof, and
   the synthetic fibers are selected from polyester fibers, polypropylene fibers, polyethylene fibers, polyamide fibers, glass fibers, carbon fibers and mixtures and combinations thereof,
9. The non-woven media according to one of the preceding aspects, characterized in that the mixture of different fiber types is selected from the group consisting of
   mixtures of synthetic and cellulose fibers, wherein the mixture comprising up to 30 wt.-% synthetic fibers, based on total weight of fibers,
   mixtures of glass and cellulose fibers, wherein there is up to 20wt% glass fibers, based on total weight of fibers, and
   mixture of cellulose, synthetic and glass fibers, comprising at least 50 wt.-%, preferably more than 60 wt.-%, more preferably more than 70 wt.-% cellulose fibers.
10. The non-woven media according to one of the preceding aspects, characterized in that the total content of the fluorine free and silicone free water-repellent with respect to the hydrophobic non-woven on a dry basis is 0.1 to 10 wt.-%, preferably 0.5 to 7.5 wt.-%, more preferably 1.0 to 5.0 wt.-%, especially preferred 1.5 to 4.5 wt.-%.
11. The non-woven media according to one of the preceding aspects, characterized in that the nonwoven additionally comprises at least one additive selected from the group consisting of flame retardants, pigments, dyes and conductivity additives, such as carbon black.
12. The non-woven media according to one of the preceding aspects, characterized in that the total content of the binder with respect to the hydrophobic non-woven on a dry basis is 10.0 to 50.0 wt.-%, preferably 15.0 to 40.0 wt.-%, especially preferred 20.0 to 30.0 wt.-%.
13. The non-woven media according to one of the preceding aspects, characterized by a basis weight 60 to 260 g/m².
14. The non-woven media according to any one of the preceding aspects, characterized by a thickness between 200 to 600 µm, measured according to ISO 9073-2:1997.
15. The non-woven media according to any one of the preceding aspects, characterized by an air permeability in between 50 and 1500 l/m²/s at 200 Pa, TAPPI Standard T 251 cm-85 ("Air Permeability of Porous Paper, Fabric and Pulp Handsheets") with 0.5 inch (12.7 mm).
16. The non-woven media according to any one of the preceding aspects, characterized by a dry MD tensile strength 1.0 to 4.6 kN/m and/or a wet MD tensile strength is 0.5 to 3.0 kN/m, measured in accordance with ISO 9073-4:2021.
17. The non-woven media according to any one of the preceding aspects, characterized by a hydrostatic pressure of more than 15 cm, measured according to EDANA NWSP 80.6 (23).
18. The non-woven media according to any one of the preceding aspects, characterized by a result in the water drop test of more than 8 remaining drops out of 10 drops after 1 min, measured with a solution of 13 vol.-% ethanol in water as described in the specification, preferably 8 remaining drops out of 10 drops, measured with a solution of 22 vol.-% ethanol in water as described in the specification, especially 8 remaining drops out of 10 drops, measured with a solution of 36 vol.-% ethanol in water as described in the specification.
19. The non-woven media according to any one of the preceding aspects, characterized in that in addition to the at least one first layer, at least one additional second layer of a non-woven comprising intermingled fibers is present and adjacent to the at least one first layer and connected to the at least one first layer.
20. The non-woven media according to any one of the preceding aspects, further comprising at least one nanofiber layer.
21. The non-woven media according to the preceding aspect, characterized in that the nonwoven is fluorine-free or silicone-free, especially fluorine-free and silicone-free.
22. The non-woven media according to any one of the both preceding aspects, characterized in that the nanofibers are nanofibers comprising or made of
   Polymers, such as polyamides (such as PA6), polyurethanes, polyacrylonitrile (PAN), polyether-sulfones (PES), poly-lactic acid (PLA), polyvinyl butyral, polyvinyl pyrrolidone or polycaprolactone,
   Organics, e.g. cellulose, nano-cellulose, porcine gelatin, lignin, cellulose acetate, hydroxypropyl cellulose, fibrin, laminin, vitronectin and hyaluronic acid and/or
   inorganic materials, such as α-alumina, γ-alumina, spinel, titanium oxides (e.g. rutil or anatase) zirconium dioxide, silica, silicon or carbon/graphite).
23. The non-woven media according to any one of the preceding aspects, characterized in that the non-woven media is
24. A method of producing a non-woven media according to one of the preceding aspects, comprising
   wet laying the at least one type of randomly intermingled fibers,
   impregnating the fibers with the at least one fluorine free and silicone free water-repellent and the at least one binder, and
   curing the binder
   thus producing a first layer.
25. The method according to the preceding aspect, characterized in that at least one further second layer, e.g. at least one nanofiber layer is applied to at least one surface of the first layer.

The present disclosure will be further illustrated by the following description and exemplary embodiments without limiting the invention to specific mentioned specimen.

### Water drop test

Solutions of a mixture of ethanol in water (with 7, 13, 22 or 36 vol.-% ethanol, respectively) were prepared.

A plurality of drops (e.g. a minimum of 30 drops with the volume of the drops being e.g. 50 µl) of the respective solutions were put on the surface of the non-woven media to be tested at ambient pressure and temperature, i.e. 23 °C, with 10 drops applied across the width of the non-woven media surface. Typically, 10 drops were applied at either edge with 10 drops applied in the middle

Test method for solutions above 7 vol.-% ethanol: 30 drops of the respective solution were applied on the surface of the non-woven media to be tested. After 1 min the number of drops were counted that remained and reported in terms of number of drops out of 10.

A non-woven media is considered as water-repellent if at least at least 8 out of 10 of the applied drops remain on the surface of the non-woven media after 1 min.

### Hydrohead

The resulting non-woven media is provided with a hydrophobicity as defined by a hydrostatic head pressure (also referred to as "hydrohead", "hydrostatic head" or generally "hydrostatic pressure" which can be measured according to EDANA NWSP 80.6 (23)).

### Thickness

The thickness of the non-woven media is measured in accordance with ISO 9073-2:1997.

### Mechanical parameters

A dry tensile strength in machine direction (MD) preferably is in between 300 and 4000 N/m can be measured in accordance with ISO 9073-4:2021.

A dry tensile strength in cross direction (CD) of between 150 and 2000 N/m can be measured in accordance with ISO 9073-4:2021.

### Air permeability

The air permeability of the media is measured according to TAPPI Standard T 251 cm-85 ("Air Permeability of Porous Paper, Fabric and Pulp Handsheets") with 0.5 inch (12.7 mm) water differential, which measures the rate of the flow of air in cubic feet per square foot of sample area per minute. Air permeability may also be referred to as porosity.

### Further parameters

The following parameters were measured according to international standards as listed in table 1:

**Table 1**

| | | **Test method** |
|---|---|---|
| Grammage | g/m² | ISO 536 TM-CQ/004 |
| Thickness | µm | ISO 534 TM-CQ/006 @134kPa |
| Corrugation | µm | ISO 534 TM-CQ/006 @134kPa |
| Air permeability @200Pa | l/m²/s | DIN 53887, EN ISO 9237 TM-CQ/027 |
| First bubble (max pore size) | mm H₂O | ASTM F-316-80 (2011) |
| Burst | kPa | ISO 2758:2014 TM-CQ/008 |
| Wet Burst | kPa | ISO 2758:2014 TM-CQ/008 |
| Wet Burst 5' 160°C | kPa | ISO 2758:2014 TM-CQ/008 |
| Stiffness MD | mg | TAPPI T543 - Gurley TM-CQ/012 |
| Stiffness MD cured 5' 160°C | mg | TAPPI T543 - Gurley TM-CQ/012 |
| Tensile strength MD | kN/m | ISO 9073-4:2021 |
| Elongation MD | % | ISO 9073-4:2021 |
| Tensile strength CD | kN/m | ISO 9073-4:2021 |
| Wet Tensile strength CD F1, F1 max | kN/m | ISO 9073-4:2021 |
| | mm | DIN 53438 TM-CQ/015 |
| Resistivity | ohm/m | ANSI EOS/ESD 11.11 [modified to 50% RH (+/-3%) and 23°C (+/-1) / 73.4°F (+/-1.8)] where samples are conditioned 24hours before testing |
| Initial pressure drop | Pa | @5.3cm/s (ISO16890) |
| Classification | | ISO 16890:2016 |

### Examplary embodiments

The non-woven media used in the following examples were made from the following blend of fibers (weights given in wt.-% of total dry weight of fibers):
Example 1 & 2: 92.3% northern bleached softwood kraft pulp, 7.7% eucalyptus pulp
Example 3: 82.8% northern bleached softwood kraft pulp, 8.6% eucalyptus pulp), 8.6% PET staple fiber (3.3 dtex X 6mm)
Example 4: 83.5% northern bleached softwood kraft pulp, 7.7% eucalyptus pulp), 8.8% PET staple fiber (3 dtex * 5mm)
Example 5: 62.2% northern bleached softwood kraft pulp, 23.6% eucalyptus pulp, 14.2% PET staple fiber (1.7 dtex X 6mm)

Intermingled fiber layers were prepared from the above fiber mixtures in a wetlaying process and non-woven medias produced herefrom as described below.

### Example 1

A non-woven media was produced with the blend of fibers indicated above, using a wet-laying process. Example 1 nonwoven media were immersed and impregnated with 25 wt.-%, based on the total weight of the nonwoven, of a chemical formulation made of a mix of acrylic binder, melamine-formaldehyde (MF) resin and water-repellent agents. In particular, the media were impregnated with the following binder formulation: 90.5-92.5 wt.-% Acronal S996S (self-crosslinking styrene-acrylic binder); 5,5 wt.-% Madurit (melamine formaldehyde resin); 2-4 wt.-% of water repellent chemical.

Comparative examples 1a, 1b, 1d, 1e, 1h and 1i used silicone containing water-repellents, Solusoft FE, Silres BS 160, Smartrepel Hydro TS or Smartrepel Hydro LDS. In the comparative examples 1c and 1g, the water repellent Ruco-Coat DB7061 (a fluorine free and silicone free water-repellent not falling under the definition of the polymer defined by formula (a) or copolymer defined by formulae (a) and (b)) from Rudolf Group was used. In the working examples according to the disclosure, examples 1f and 1j, Fibralast FN-300 from AGC Chemical, a water repellent based on a silicone-free and fluorine-free hyperbranched brush polymer falling under the definition of the water repellent of the present disclosure was used..

The samples were cured in an oven for 5 mins at 160°C. The corresponding properties/performances of the produced non-woven media are given in Table 2 below. All non-woven media were formulated with a post-impregnated and cured grammage of 130 g/m².

**Table 2**

| Sample | | Comparative Example | Comparative Example | Comparative Example | Comparative Example | Comparative Example | **Working Example** | Comparative Example | Comparative Example | Comparative Example | Working Example |
|---|---|---|---|---|---|---|---|---|---|---|---|
| | | Example 1a | Example 1b | Example 1c | Example 1d | Example 1e | Example **1f** | Example 1g | Example 1h | Example 1i | **Example 1j** |
| Amount and Type of Water-repellent (wt%) | | **2% Solusoft FE** | **2% Silres BS 160** | **2% Ruco coat** | **2% Smartrepel Hydro TS** | **2% Smartrepel Hydro LDS** | **2% FN300** | **4% Ruco coat** | **4% Smartrepel Hydro TS** | **4% Smartrepel Hydro LDS** | **4% FN300** |
| Dry burst | Kpa | 454 | 375 | 393 | 428 | 400 | 391 | 406 | 376 | 372 | 405 |
| Wet burst | Kpa | 342 | 308 | 325 | 293 | 320 | 312 | 321 | 239 | 272 | 285 |
| Dry CD stiffness | mg | 2060 | 2037 | 2134 | 1807 | 1689 | 1860 | 2067 | 2015 | 1606 | 1955 |
| Wet CD stiffness | mg | 625 | 882 | 756 | 444 | 570 | 600 | 771 | 666 | 630 | 504 |
| Dry CD Tensile St. | KN/m | 3.83 | 3.44 | 4.5 | 3.62 | 3.5 | 3.25 | 3.55 | 3.48 | 3.18 | 3.44 |
| Wet CD Tensile St. | KN/m | 2.11 | 2.13 | 1.99 | 1.69 | 1.94 | 1.8 | 2.1 | 1.74 | 1.96 | 1.54 |
| Dry CD Elongation | % | 7.36 | 6.22 | 7.3 | 9.07 | 8.48 | 6.3 | 6.4 | 6.43 | 5.59 | 9.07 |
| Wet CD Elongation | % | 11.17 | 10.83 | 11.41 | 13.55 | 14.05 | 12.03 | 10.34 | 11.05 | 11.55 | 14.1 |
| Hydrophobicity | number of drops out of 10, at different vol% of EtOH/H₂O | 36 vol%: 10 drops | 36 vol%: 10 drops | 36 vol%: 0 drops | 36 vol%: 0 drops | 36 vol%: 0 drops | 36 vol%: 3 drops | 36 vol%: 0 drops | 36 vol%: 2 drops | 36 vol%: 4 drops | 36 vol%: 8 drops |
| | | 22 vol%: 10 drops | 22 vol%: 10 drops | 22 vol%: 10 drops | 22 vol%: 5 drops | 22 vol%: 5 drops | 22 vol%: 8 drops | 22 vol%: 10 drops | 22 vol%: 10 drops | 22 vol%: 10 drops | 22 vol%: 10 drops |
| | | 13 vol%: 10 drops | 13 vol%: 10 drops | 13 vol%: 10 drops | 13 vol%: 10 drops | 13 vol%: 10 drops | 13 vol%: 10 drops | 13 vol%: 10 drops | 13 vol%: 10 drops | 13 vol%: 10 drops | 13 vol%: 10 drops |
| | | 7 vol%: 10 drops | 7 vol%: 10 drops | 7 vol%: 10 drops | 7 vol%: 10 drops | 7 vol%: 10 drops | 7 vol%: 10 drops | 7 vol%: 10 drops | 7 vol%: 10 drops | 7 vol%: 10 drops | 7 vol%: 10 drops |
| | | H₂O: 10 drops | H₂O:10 drops | H₂O:10 drops | H₂O: 10 drops | H₂O: 10 drops | H₂O: 10 drops | H₂O: 10 drops | H₂O: 10 drops | H₂O:10 drops | H₂O:10 drops |
| Air permeability | l/m2/s | 229 | 206 | 220 | 205 | 211 | 196 | 210 | 219 | 133 | 219 |

Based on this data, it was confirmed that Fibralast FN-300 gives the best hydrophobic properties at 4% addition level, showing that 8 out of 10 droplets containing 22 vol.-% EtOH/78 vol.-% water did not penetrate the surface after 1 minute. This provided a much better performance than Smartrepel chemicals (which was fluoro-free but contained silicones) and Ruco-coat (which was fluoro-free and silicone-free but does not have the same chemistry). Even at higher concentrations of ethanol (i.e. 36 vol.-%), the best results were observed with FN-300, i.e., the water-repellent used according to the present invention.

Surprisingly, it was demonstrated that the water-repellent not only has an influence on the hydrophobicity, but also on the air permeability and mechanical properties such as stiffness and strength. Only with a water repellent as defined by the polymer of formula (a) or the copolymer of formulae (a) and (b) did, all properties excel compared to the comparative examples. It is noted that the produced non-woven media could be provided with an additional nanofiber layer for improved filtration efficiency. A flame-retardant version of these non-woven media can also be designed by adding a flame-retardant additive (e.g., Aflammit) in the binder mix.

### Example 2

A flame-retardant and conductive version of the cellulosic paper described above was impregnated with 25wt%, based on the total weight of the nonwoven, of the following binder formulation: 46-49.6 wt.-% of Vinnol CE35 (latex aqueous dispersion of a terpolymer of vinyl chloride, vinyl acetate and ethylene), 23.9% of Appretan (conductive carbon black) , 21.7 wt.-% of Aflamit (flame-retardant additive), 3.9% of Madurit (melamine formaldehyde resin) and between 0.9-5 wt.-% of a water-repellent additive. The results are listed in the following table 3. Example 2a contained a binder formulation including 0.9wt% of a C6 fluorine based water repellent (HeiQ Barrier). Example 2b is a further comparative example which contained a silicone based water-repellent, Smartrepeal Hydro LD). Example 2d is also a comparative example wherein the binder included 5wt% of Ruco-Coat DB7061, a fluorine free and silicone free water-repellent not falling under the definition of the polymer of formula (a) or the copolymer of formulae (a) and (b). Example 2c was the working example, which included Fibralast FN-300 from AGC Chemical, a water repellent based on a silicone-free and fluorine-free hyperbranched brush polymer falling under the definition of the polymer of formula (a) or the copolymer of formulae (a) and (b) of the present disclosure. The samples were cured in an oven for 5 mins at 160°C. The corresponding properties/performances of the produced non-woven media are given in Table 2 below. All non-woven media were formulated with a post-impregnated and cured grammage of 130 g/m².

**Table 3**

| | | Example 2a | Example 2b | Example 2c | Example 2d |
|---|---|---|---|---|---|
| Latex (Vinnol CE35) | | 49,6 | 46 | 46 | 46 |
| Carbon black (Appretan) | | 23,9 | 23,9 | 23,9 | 23,9 |
| FR additive (Aflammit) | | 21,7 | 21,7 | 21,7 | 21,7 |
| Melamine resin (Madurit) | | 3,9 | 3,9 | 3,9 | 3,9 |
| C6 additive (HeiQ Barrier) | | 0,9 | | | |
| RUCO-COAT BC 7061 NEW | | | | | 5 |
| Smartrepeal Hydro LDS | | | 5 | | |
| Fibralast FN300 | g/m² | | | 5 | |
| Grammage | Kpa | 130 | 130 | 130 | 130 |
| Dry burst | Kpa | 297 | 332 | 321 | 313 |
| Wet burst................. | Kpa | 183 | 206 | 167 | 193 |
| Dry CD stiffness | mg | 1771 | 1622 | 1345 | 1696 |
| Wet CD stiffness...... | mg | 370 | 373 | 301 | 443 |
| Dry CD Tensile St. | KN/m | 2,23 | 2,43 | 2,63 | 2,57 |
| Wet CD Tensile St. | KN/m | 1 | 1,11 | 1 | 1,08 |
| Dry CD Elongation | % | 6,86 | 6,95 | 7,81 | 7,29 |
| Wet CD Elongation | % | 12,94 | 12,52 | 12,31 | 11,9 |
| Resistivity | 'Ω*m | 6,75 E-4 | 1,17 E-05 | 1,05 E-4 | 1,69 E-05 |
| Hydrophobicity 7% EtOH/H₂O | | 6 | 0 | 10 | 5 |
| Hydrophobicity 13% EtOH/H₂O | | 0 | 0 | 10 | 5 |
| Hydrophobicity 22% EtOH/H₂O | | 0 | 0 | 10 | 0 |
| Hydrophobicity 36% EtOH/H₂O | | 0 | 0 | 10 | 0 |
| Flame retardancy | mm | 108 | 121 | 110 | 111 |

As with Example 1 grades, the best results were obtained for Fibralast FN-300, which was even better than the comparative example containing a C6 fluorochemical additive, silicone or Ruco-coat.

### Example 3

A trial was run using Example 3 material as indicated above. The non-woven media were prepared with both the standard C6 chemistry (fluorochemcial water-repellent) and Fibralast FN-300 from AGC Chemical, a water repellent based on a silicone-free and fluorine-free hyperbranched brush polymer falling under the definition of the polymer of formula (a) or the copolymer of formulae (a) and (b) of the present disclosure. (tested according to the following standard production). The standard recipe was: 500 kg Water, 746 kg Acronal S996S (self-crosslinking styrene-acrylic binder), 72 Kg Madurit (melamine formaldehyde resin), 1500 kg Aflammit (flame-retardant additive), 55 kg Unidyne (C6-water repellent) (comparative example). For the inventive example Unidyne was replaced by 107 Kg of Fibralast FN300 as the water-repellent binder system. No variation in pH, rheology, stability of the coating recipe was observed. No changes of the machine settings were made. The results are listed in the following table 4.

**Table 4**

| | Grammage g/m2 | Thickness µm | Air perm. l/m²/s | First bubble mm H₂O (Maximum pore) | Burst kPa | Wet burst kPa | Stiffness MD mg | MD Tens. Str. kN/m | Drop test 7% vol.% EtOH | F1 mm | F1 Max mm | |
|---|---|---|---|---|---|---|---|---|---|---|---|---|
| **comparative 3 example** | 133.1 | 388 | 278 | 150 | 182 | 187 | 3912 | 4.93 | 10 | 9 | 91 | 103 |
| **example 3** | 134.5 | 414 | 250 | 136 | 163 | 152 | 3734 | 4.00 | 10 | 8 | 81 | 85 |

As can be observed, a non-woven media material with similar porosity, air permeability, mechanical strength and similar water-repellency could be obtained, however the drawbacks of fluoro-chemicals can be avoided.

A thin layer of polyamide PA6 nanofibers was added to the materials produced in example 3 as described above. The nanofiber layer was applied via electrospinning the polyamide directly onto the surface of the water-repellent treated non-woven media. The air permeability and filtration properties are given below in table 5 and show that the water-repellent treatment do not affect the filtration performance of the filter media. In fact, the inventive example exhibited similar hydrophobicity, pore structure (as indicated by the air permeability) and filtration performance.

**Table 5**

| | Air permeability @200Pa (l/m²/s) | Drop test 13% | Initial pressure drop (Pa) | Classification ISO 16890:2016 |
|---|---|---|---|---|
| **comparative example 3 + nanofiber layer** | 143 | 9 | 89 | ePM1 90% |
| **example 3 + nanofiber layer** | 160 | 8 | 72 | ePM1 85% |

### Example 4

Similar trial was conducted for the Example 4 material. Example 4 non-woven media were prepared with both the standard C6 chemistry (fluorochemcial water-repellent) and Fibralast FN-300 from AGC Chemical, a water repellent based on a silicone-free and fluorine-free hyperbranched brush polymer falling under the definition of the polymer of formula (a) or the copolymer of formulae (a) and (b) of the present disclosure. (tested according to the following standard production). The standard recipe was: 1200 kg Water, 800 kg Vinnol CE35 (latex aqueous dispersion of a terpolymer of vinyl chloride, vinyl acetate and ethylene), 45 kg Madurit (melamine formaldehyde resin), 700 kg Aflammit (flame-retardant additive), 550 kg Appretan (conductive carbon black), 32 kg Unidyne (C6 water-repellent chemical) (comparative example). For this example, Unidyne was replaced by 120 Kg of Fibralast FN300 as the water-repellent binder system. No variation in pH, rheology or stability of the coating recipe was observed. No changes of the machine settings were made. The results are listed in table 6.

**Table 6**

| | Grammage g/m2 | Thickness µm | Air perm. l/m²/s | First bubble mm H₂O (Maximum pore) | Burst kPpa | Wet burst kPa | Stiffness MD mg | Drop test 7% | Drop test 13% | Drop test 22% | F1 mm | F1 Max mm | Resistivity ohm/m |
|---|---|---|---|---|---|---|---|---|---|---|---|---|---|
| **comparative example 4** | 141 | 378 | 181 | 172 | 197 | 180 | 3743 | 10 | 0 | 0 | 81 | 91 | 1,15 E-5 |
| **example 4** | 141 | 361 | 196 | 164 | 230 | 155 | 3200 | 10 | 10 | 9 | 81 | 95 | 5,5 E-4 |

As can be observed, material was made with similar porosity, air permeability, mechanical strength and better water-repellency.

A thin layer of polyamide PA6 nanofibers was added to the materials produced in examples 5. The nanofiber layer was applied via electrospinning the polyamide directly onto the surface of the water-repellent treated non-woven media. The air permeability and filtration properties are given below and show that the water-repellent treatment do not affect the filtration performance of the filter media. In fact, the example exhibited better hydrophobicity than the comparative example, while retaining similar pore structure (as indicated by the air permeability) and similar filtration performance. The results are listed in table 6 below.

**Table 6**

| | Air permeability @200Pa (l/m²/s) | Drop test 22% | Initial pressure drop (Pa) | Classification ISO16890:2016 |
|---|---|---|---|---|
| **comparative example 4 + nanofiber layer** | 143 | 0 | 95 | ePM1 90% |
| **example 4 + nanofiber layer** | 121 | 9 | 104 | ePM1 85% |

### Example 5

Similar trial was conducted for Example 5 media. The fiber composition of the nonwovens according to Example 5 are indicated above. Example 5 non-woven media were prepared with both the standard C6 chemistry (fluorochemcial water-repellent) and Fibralast FN-300 from AGC Chemical, a water repellent based on a silicone-free and fluorine-free hyperbranched brush polymer falling under the definition of the polymer of formula (a) or the copolymer of formulae (a) and (b) of the present disclosure. (tested according to the following standard production). The standard recipe was: The standard recipe was: 1700 kg Water, 1300 kg Acronal S996S (self-crosslinking styrene-acrylic binder), 56 kg Madurit (melamine formaldehyde resin), 45 kg Unidyne (comparative example). For the example, Unidyne was replaced by 68 kg of Fibralast FN300. No variation in pH, rheology, stability of the coating recipe was observed. No changes of machine settings were made. The obtained results are listed in table 7.

**Table 7**

| | Grammag e g/m² | Thickness µm | Air perm. l/m²/s | First bubble mm H₂O (Maximum pore) | Burst kPa | Wet burst kPa | Stiffness MD | MD Tens. Str. kN/m | Drop test 22% s | Drop test 36% |
|---|---|---|---|---|---|---|---|---|---|---|
| **comparative example 5** | 126 | 334 | 223 | 163 | 319 | 313 | 4178 | 5.26 | 9 | 9 |
| **example 5** | 123.3 | 323 | 229 | 176 | 328 | 281 | 4622 | 5.57 | 10 | 10 |

As can be observed, nonwoven material was made with similar porosity, air permeability, mechanical strength and better water-repellency.

A thin layer of polyamide PA6 nanofibers was added to the materials produced in examples 5. The nanofiber layer was applied via electrospinning the polyamide directly onto the surface of the water-repellent treated non-woven media. The air permeability and filtration properties are given below and show that the water-repellent treatment do not affect the filtration performance of the filter media. In fact, the example exhibited better hydrophobicity than the comparative example, while retaining similar pore structure (as indicated by the air permeability) and similar filtration performance. The results are summarized in table 8.

**Table 8**

| | Air permeability @200Pa (l/m²/s) | Drop test 36% | Initial pressure drop (Pa) | Classification ISO 16890:2016 |
|---|---|---|---|---|
| **comparative example 4 + nanofiber layer** | 135 | 9 | 81 | ePM1 85% |
| **example 4 + nanofiber layer** | 143 | 10 | 79 | ePM1 85% |

## Claims

1. Non-woven media comprising at least one first layer comprising
a) at least one type of randomly intermingled fibers
b) said fibers being impregnated with at least one fluorine free and silicone free water-repellent comprising a polymer (P1) having a repeating unit based on a first monomer represented by Formula (a)
(R¹-Q¹)HC=CH(Q²-R²) Formula (a)
wherein in Formula (a), Q¹ and Q² each independently represent a divalent linking group, and R¹ and R² each independently represent a monovalent hydrocarbon group having 8 to 28 carbon atoms, and
c) at least one binder selected from the group consisting of latex binders, melamine resins, phenolic resins, acrylic and a combination of two or more of the aforementioned binders,
wherein the fibers are bound by means of the binder.

2. The non-woven media according to claim 1, **characterized in that** in the polymer (P1)
Q¹ and Q² of the monomer (a) are each independently one of the group consisting of -C(=O)-, -C(=O)-O-, -O-C(=O)-, and -C(=O)-NH- and/or R¹ and R² of the monomer according to formula (a) are each independently a monovalent hydrocarbon group having 8 to 24, preferably 12 to 24 carbon atoms.

3. The non-woven media according to one of the preceding claims, **characterized in that** the polymer (P1) is a copolymer further having a repeating unit based on a second monomer, being different from the first monomer, the second monomer having one polymerizable unsaturated group and an electron-donating group adjacent to the unsaturated group in one molecule, wherein the second monomer preferably is represented by Formula (b),
CH₂=CHR³ Formula (b)
wherein in Formula (b), R³ is an electron-donating group.

4. The non-woven media according to the preceding claim, **characterized in that** the electron-donating group is at least one selected from the group consisting of an aliphatic hydrocarbon group which may have a substituent, -O-C(=O)R⁴, -OR⁴, and -NH-C(=O)R⁴, in which R⁴ represents an aliphatic hydrocarbon group which may have a substituent.

5. The non-woven media according to one of the preceding claims **characterized in that** a proportion of
the unit based on the monomer (a) is 5% to 80% by mass with respect to all constitutional units of the polymer (P1) and/or
the unit based on the monomer (b) is 20% to 95% by mass with respect to all constitutional units of the polymer (P1).

6. The non-woven media according to one of the claims 2 to 5, **characterized in that** the polymer (P1) is a copolymer further having at least one repeating unit based on a monomer, selected from the group consisting of the following third to fifth monomers:
c) a third monomer represented by Formula (c),
CH₂=CX¹X² Formula (c)
wherein in Formula (c), X¹ and X² each independently represent a halogen atom or a hydrogen atom, and X¹ and X² are not hydrogen atoms at the same time, wherein preferably wherein the monomer (c) is at least one selected from the group consisting of vinyl chloride and vinylidene chloride,
d) a fourth monomer represented by Formula (d),
CH₂=CR⁵C(=O)OR⁶ Formula (d)
wherein in Formula (d) R⁵ represents a hydrogen atom or a methyl group, and R⁶ represents a monovalent hydrocarbon group which may have a substituent.
e) a fifth monomer having a crosslinkable functional group.

7. The non-woven media according to one of the preceding claims, **characterized in that** the fibers are selected from the group consisting of natural fibers, synthetic fibers, glass fibers, carbon fibers and mixture of different fiber types or different types of the same fibers.

8. The non-woven media according to the claim 7, **characterized in that** the
natural fibers are selected from the group consisting of cellulose fibers, such as wood fibers, pulp, cotton, and vegetable fibers comprising cellulose and animal fibers, such as wool, and mixtures and combinations thereof, and
the synthetic fibers are selected from polyester fibers, polypropylene fibers, polyethylene fibers, polyamide fibers, glass fibers, carbon fibers and mixtures and combinations thereof,

9. The non-woven media according to one of the preceding claims, **characterized in that** the mixture of different fiber types is selected from the group consisting of
mixtures of synthetic and cellulose fibers, wherein the mixture comprising up to 30 wt.-% synthetic fibers, based on total weight of fibers,
mixtures of glass and cellulose fibers, wherein there is up to 20wt% glass fibers, based on total weight of fibers, and
mixture of cellulose, synthetic and glass fibers, comprising at least 50 wt.-%, preferably more than 60 wt.-%, more preferably more than 70 wt.-% cellulose fibers.

10. The non-woven media according to one of the preceding claims, **characterized in that** the total content of the fluorine free and silicone free water-repellent with respect to the hydrophobic non-woven on a dry basis is 0.1 to 10 wt.-%, preferably 0.5 to 7.5 wt.-%, more preferably 1.0 to 5.0 wt.-%, especially preferred 1.5 to 4.5 wt.-%.

11. The non-woven media according to one of the preceding claims, **characterized in that** the nonwoven additionally comprises at least one additive selected from the group consisting of flame retardants, pigments, dyes and conductivity additives, such as carbon black.

12. The non-woven media according to one of the preceding claims, **characterized in that** the total content of the binder with respect to the hydrophobic non-woven on a dry basis is 10.0 to 50.0 wt.-%, preferably 15.0 to 40.0 wt.-%, especially preferred 20.0 to 30.0 wt.-%.

13. The non-woven media according to one of the preceding claims, **characterized by** a basis weight 60 to 260 g/m².

14. The non-woven media according to any one of the preceding claims, **characterized by** a thickness between 200 to 600 µm, measured according to ISO 9073-2:1997.

15. The non-woven media according to any one of the preceding claims, **characterized by** an air permeability in between 50 and 1500 l/m²/s at 200 Pa, TAPPI Standard T 251 cm-85 ("Air Permeability of Porous Paper, Fabric and Pulp Handsheets") with 0.5 inch (12.7 mm).

16. The non-woven media according to any one of the preceding claims, **characterized by** a dry MD tensile strength 1.0 to 4.6 kN/m and/or a wet MD tensile strength is 0.5 to 3.0 kN/m, measured in accordance with ISO 9073-4:2021.

17. The non-woven media according to any one of the preceding claims, **characterized by** a hydrostatic pressure of more than 15 cm, measured according to EDANA NWSP 80.6 (23).

18. The non-woven media according to any one of the preceding claims, **characterized by** a result in the water drop test of more than 8 remaining drops out of 10 drops after 1 min, measured with a solution of 13 vol.-% ethanol in water as described in the specification, preferably 8 remaining drops out of 10 drops, measured with a solution of 22 vol.-% ethanol in water as described in the specification, especially 8 remaining drops out of 10 drops, measured with a solution of 36 vol.-% ethanol in water as described in the specification.

19. The non-woven media according to any one of the preceding claims, **characterized in that** in addition to the at least one first layer, at least one additional second layer of a non-woven comprising intermingled fibers is present and adjacent to the at least one first layer and connected to the at least one first layer.

20. The non-woven media according to any one of the preceding claims, further comprising at least one nanofiber layer.

21. The non-woven media according to any one of the both preceding claims, **characterized in that** the nanofibers are nanofibers comprising or made of
Polymers, such as polyamides (such as PA6), polyurethanes, polyacrylonitrile (PAN), polyether-sulfones (PES), poly-lactic acid (PLA), polyvinyl butyral, polyvinyl pyrrolidone or polycaprolactone, Organics, e.g. cellulose, nano-cellulose, porcine gelatin, lignin, cellulose acetate, hydroxypropyl cellulose, fibrin, laminin, vitronectin and hyaluronic acid and/or
inorganic materials, such as α-alumina, γ-alumina, spinel, titanium oxides (e.g. rutil or anatase) zirconium dioxide, silica, silicon or carbon/graphite).

22. The non-woven media according to the preceding claim, **characterized in that** the nonwoven is fluorine-free or silicone-free, especially fluorine-free and silicone-free.

23. A method of producing a non-woven media according to one of the preceding claims, comprising
wet laying the at least one type of randomly intermingled fibers,
impregnating the fibers with the at least one fluorine free and silicone free water-repellent and the at least one binder, and
curing the binder
thus producing a first layer.

24. The method according to the preceding claim, **characterized in that** at least one further second layer, e.g. at least one nanofiber layer, is applied to at least one surface of the first layer.
